# EUROPÄISCHE PATENTSCHRIFT

(11) **EP 3 071 373 B1**
(45) Veröffentlichungstag und Bekanntmachung des Hinweises auf die Patenterteilung: **25.10.2017**
(21) Anmeldenummer: 14823881.9
(22) Anmeldetag: 18.11.2014
(51) Int. Cl.: B25J 9/16

(54) **ROBOTERARM**
ROBOT ARM
BRAS DE ROBOT

(30) Priorität: 19.11.2013 DE 102013223603
(43) Veröffentlichungstag der Anmeldung: 28.09.2016
(73) Patentinhaber: Ferrobotics Compliant Robot Technology GmbH, 4040 Linz (AT)
(72) Erfinder: FERRARA, Paolo, A-4531 Kematen an der Krems (AT); NADERER, Ronald, A-4181 Oberneukirchen (AT)
(74) Vertreter: Westphal, Mussgnug & Partner Patentanwälte mbB
(86) Internationale Anmeldenummer: PCT/AT2014/050275
(87) Internationale Veröffentlichungsnummer: WO 2015/074089

(56) Entgegenhaltungen:
- YUANCAN HUANG ET AL: "Integrated rotary compliant joint and its impedance-based controller for single-joint pressing massage robot", ROBOTICS AND BIOMIMETICS (ROBIO), 2012 IEEE INTERNATIONAL CONFERENCE ON, IEEE, 11. Dezember 2012 (2012-12-11), Seiten 1962-1967, XP032353066, DOI: 10.1109/ROBIO.2012.6491255 ISBN: 978-1-4673-2125-9
- MORGAN QUIGLEY ET AL: "A low-cost compliant 7-DOF robotic manipulator", ROBOTICS AND AUTOMATION (ICRA), 2011 IEEE INTERNATIONAL CONFERENCE ON, IEEE, 9. Mai 2011 (2011-05-09), Seiten 6051-6058, XP032034153, DOI: 10.1109/ICRA.2011.5980332 ISBN: 978-1-61284-386-5
- YOON S-S ET AL: "Safe ann with mr-based passive compliant joints and visco-elastic covering for service robot applications", PROCEEDINGS OF THE 2003 IEEE/RSJ INTERNATIONAL CONFERENCE ON INTELLIGENT ROBOTS AND SYSTEMS. (IROS 2003). LAS VEGAS, NV, OCT. 27 - 31, 2003; [IEEE/RSJ INTERNATIONAL CONFERENCE ON INTELLIGENT ROBOTS AND SYSTEMS], NEW YORK, NY : IEEE, US, Bd. 3, 27. Oktober 2003 (2003-10-27), Seiten 2191-2196, XP010675436, DOI: 10.1109/IROS.2003.1249196 ISBN: 978-0-7803-7860-5
- MORITA T ET AL: "DEVELOPMENT OF ONE-D.O.F. ROBOT ARM EQUIPPED WITH MECHANICAL IMPEDANCE ADJUSTER", PROCEEDINGS OF THE 1995 IEEE/RSJ INTERNATIONAL CONFERENCE ON INTELLIGENT ROBOTS AND SYSTEMS. IROS 95. HUMAN ROBOT INTERACTION AND COOPERATIVE ROBOTS. PITTSBURGH, AUG. 5 - 9, 1995; [PROCEEDINGS OF THE IEEE/RSJ INTERNATIONAL CONFERENCE ON INTELLIGENT R, 5. August 1995 (1995-08-05), Seiten 407-412, XP000740921, DOI: 10.1109/IROS.1995.525828 ISBN: 978-0-7803-3006-1
- VANDERBORGHT B ET AL: "Variable impedance actuators: A review", ROBOTICS AND AUTONOMOUS SYSTEMS, Bd. 61, Nr. 12, 6. August 2013 (2013-08-06), Seiten 1601-1614, XP028757853, ISSN: 0921-8890, DOI: 10.1016/J.ROBOT.2013.06.009

## Beschreibung

Die Erfindung betrifft einen flexiblen Roboterarm welcher durch elektrische Aktuatoren angetrieben wird.

Die Publikation Yuancan Huang et al., "Integrated Rotary Compliant Joint and Its Impedance-based Controller for Single-Joint Pressing Massage Robot', in: Proc. 2012 IEEE ROBIO, 11. Dezember 2012, Seiten 1962-1967*,* betrifft einen Massageroboter, der einen sicheren Kontakt zwischen Mensch und Roboter mittels eines nachgiebigen Gelenks (*Compliant Joint*) ermöglichen soll. Die Publikation Yoon S.-S. et al.: "Safe Arm with MR-base Passive Compliant joints and Visco-Elastic Covering for Service Robot Applications", in Proc. 2003 IEEE/RSJ IROS, Bd. 3, 27. Oktober 2003, Seiten 2191-2196, betrifft ebenfalls einen sicheren Roboterarm mit passiv nachgiebigem Gelenk für menschenfreundliche Service-Roboter.

Die Publikation Vanderborght B. et al.: "Variable impedance actuators: A review", Robotics and Autonomous Systems, Bd. 61, Nr. 12, Seiten 1601-1614, gibt einen Überblick über Aktuatoren mit variable Impedanz. Die Publikation Morita T. et al.: "Development of One-D.O. F. Robot Arm equipped with Mechanical Impedance Adjuster", Proc. 1995 IEEE/RSJ International IROS, 5. August 1995, Seiten 407-412*,* betrifft ein Robotergelenk mit Impedanzregelung. Die Publikation Quigley M. et al.: "A low-cost compliant 7-DOF robotic manipulator", Proc. 2011 IEEE ICRA, 9. Mai 2011, Seiten 6051-6058*,* betrifft ebenfalls einen Roboter mit elastisch nachgiebigen Gelenken. Die DE 3630822 C2 (Bridgestone) zeigt einen um genau eine Achse schwenkbaren Arm für einen Industrieroboter. Der Arm ist an einer drehbar gelagerten Riemenscheibe befestigt, welche von einem Seil umspannt wird, wobei an den beiden von der Riemenscheibe wegführenden Enden jeweils ein so genannter Luftmuskel angeordnet ist. Ein Luftmuskel besteht aus einem schlauchartigen Mittelteil und zwei plattenartigen Abschlussstücken, von denen zumindest eines mit einem Luftdurchlass versehen ist. Wenn der schlauchartige Mittelteil aufgeblasen wird, so erweitert er sich im Umfang und verkürzt sich in seiner Länge. Dieses Verkürzen der Länge kann unter Überwindung einer äußeren Zugkraft erfolgen.

Wenn im Anwendungsfall entsprechend der DE 3630822 ein Luftmuskel anzieht, so wird der Arm in eine Drehrichtung geschwenkt; wenn dieser Luftmuskel nachgelassen wird, und der zweite Luftmuskel anzieht, so wird der Arm in die entgegengesetzte Richtung geschwenkt. Der Arm ist "tastfähig" in dem Sinn, dass er bei Anliegen einer äußere Kraft von sich aus mit einer weichen Charakteristik elastisch nachgibt, wodurch unter Zuhilfenahme von Positionssensoren und der Berücksichtigung des in den Luftmuskeln anliegenden Drucks auf die Größe der äußeren Kraft rückgeschlossen werden kann. Der vorgeschlagene Arm für Industrieroboter hat sich nicht durchgesetzt. Da das elastische Nachgeben hier unkontrolliert erfolgt, hat man eher steifere Antriebsprinzipien, beispielsweise mittels Elektromotoren oder Hydraulikzylindern bevorzugt, und erforderlichenfalls ein "weiches Greifen" durch separate Griffteile verwirklicht.

Die US 4 984 568 zeigt einen mittels mehreren, zueinander schwenkbaren Hydraulikzylindern angetriebenen, zur Rückenmassage dienenden Roboterarm. Er wird am seitlichen Rahmenteil eines Bettegestells befestigt, ragt über die Liegefläche des Bettes hinaus, und drückt auf den Rücken eines auf dem Bett auf dem Bauch liegenden Menschen. Der Roboterarm ist von dem auf dem Bett liegenden Menschen mittels einer Steuereinheit steuerbar. Massageroboter dieser Art haben mehrere Nachteile. Hydraulikanlagen sind kostspielig, schwer, verbreiten oft einen Geruch nach Hydrauliköl und bringen die Gefahr der Verschmutzung durch auslaufendes Hydrauliköl mit sich. Als Massageroboter sind sie auch deshalb gefährlich, da bei einem Fehler in der Hydraulikanlage sehr rasch, sehr gefährlich große Kräfte auf den behandelten Menschen wirken können. Die DE 195 24 666 C1 zeigt einen Massageroboter, welcher ebenfalls seitlich am Bett angeordnet ist. Der über lineare Antriebe in drei Raumkoordinaten bewegliche Werkzeughalter kann verschiedene Massagemittel halten, und damit auf den zu massierenden Menschen einwirken. Für die Steuerung stehen verschiedene Programme zur Auswahl. Die Einwirkung auf den Menschen ist kraftgeregelt. Für die Antriebe sind Pneumatikzylinder oder Elektromotoren vorgesehen. Um bei Fehlern der Regelung Gefährdungen der zu massierenden Person auszuschließen sind in der Anlage Sollbruchstellen vorgesehen, welche bei Überschreiten von zulässigen Kräften brechen.

Die US 6 532 400 beschreibt einen Roboter mit mehreren Segmenten, die in Anlehnung an den Aufbau eines menschlichen Beines aneinander angeordnet sind und mit Hilfe muskelartiger Aktuatoren angetrieben werden. Der Roboter weist eine Steuerung auf, die mit Hilfe von Dehnungssensoren, Beschleunigungssensoren und resistiven Kraftsensoren den momentanen Zustand des Roboters messen und die Aktuatoren entsprechend an- steuern kann.

Massageroboter in sehr ähnlicher Bauart zeigen auch die US 5083552, und die US 2001/0014781 A1. Bei entsprechend guter Steuerung können diese Massageroboter durchaus gut massieren. Sie sind aber durchwegs sehr kostspielig in der Anschaffung, beanspruchen viel Platz, und wirken bedrohlich. Zudem sind sie auf Grund der kaskadenartig aufeinander angeordneten Linearführungen in Bezug auf manche Kräfte, wie sie beim Bewegen durch Menschen im Zusammenhang mit der Massage auftreten können, sehr beschädigungsanfällig.

Die DE 101 39 807 A1 zeigt einen aus mehreren verketteten schwenkbaren Hebeln aufgebauten Roboterarm für industrielle Anwendungen. Das Gelenk zwischen zwei Hebeln ist besonders vorteilhaft ausgeführt. Die Antriebsmittel für die einzelnen Hebel sind direkt an den Hebeln angeordnete elektrisch, hydraulisch oder pneumatisch betätigte Hubstangeneinheiten. Nachteilig ist, dass diese Antriebsmittel relativ schwer, platzauf- wendig und kostspielig sind.

Die BR 9303695 A zeigt einen aus mehreren miteinander verketteten schwenkbaren Hebeln aufgebauten Roboterarm wobei jeder der Schwenkhebel aus einer Basis einer Stütze einem schwenkbaren Teil und jeweils zwei Luftmuskeln besteht, wobei Basis und schwenkbarer Teil eines Schwenkhebels an gegenüberliegenden Enden der Stütze befestigt sind, der schwenkbare Teil gegenüber der Stütze um eine dazu normal liegende Achse drehbar gelagert ist, wobei sich die beiden Luftmuskeln zwischen Basis und schwenkbarem Teil erstrecken und am schwenkbaren Teil an unterschiedlichen Seiten der Schwenkachse angreifen und wobei der schwenkbare Teil eines Hebels mit der Basis des zweiten Hebels starr verbunden ist. Trotz des einfachen und robusten Aufbaues hat sich diese Bauweise bisher nicht durchgesetzt, vermutlich deshalb, weil in der etwas schwierigen Ansteuerung der Luftmuskel eine zu große Quelle von Ungenauigkeiten und Gefährdungen gesehen wird.

Die WO 2003080297 A1 beschreibt den Nachbau einer menschlichen Hand und eines menschlichen Armes mit Hilfe von verketteten, aneinander schwenkbaren Teilen, deren Relativbewegung zueinander durch Luftmuskeln angetrieben wird, die über Seile, deren Funktion mit der menschlicher Sehnen vergleichbar ist, auf die einzelnen zu bewegenden Teile einwirken. Der Vorteil von Luftmuskeln wird dabei darin gesehen, dass sie verglichen mit anderen Antriebsmitteln weniger Platz beanspruchen. Die Bauweise entsprechend der WO 2003080297 A1 ist aber dennoch derart komplex, dass sie zwangsläufig zu sehr hohen Kosten führt und damit kaum in nennenswerter Breite zum Einsatz kommen kann.

Die US 5,417,643 und die DE 299 22 651 U1 zeigen einen Stuhl, welcher mit einer als Therapiegerät für die passive Mobilisation von Menschen ausgeführten, mehrgliedrigen Armlehne versehen ist. Die einzelnen Glieder sind geführt beweglich aneinander befestigt. Zwischen den einzelnen Gliedern wirken steuerbare Antriebe. Der auf dem Stuhl Platz nehmende Patient legt einen Arm auf die Armlehne. Entsprechend einem Steuerprogramm wird dann die Armlehne und mit dieser der Arm des Patienten bewegt. Entsprechend der DE-Schrift wird nicht darauf eingegangen was passiert, wenn die gesteuerten Bewegungen der Armlehne von den Bewegungsmöglichkeiten des Patienten abweichen und somit Schmerzen oder gar Verletzungen des Patienten bewirken könnten. Entsprechend der US-Schrift wird für diesen Fall eine schnelle Abschaltung vorgesehen. Nachteilig daran ist, dass dann, wenn diese Abschaltung wirksam wird, schon gefährlich große Kräfte auf den Patienten eingewirkt haben können und dass damit die Behandlung abgebrochen wird.

Entsprechend der EP 1 609 451 A1 wird ein Gerät für die passive Heilgymnastik vorgeschlagen, welches aus starren, schalenartigen Teilen besteht, die ähnlich wie Teile einer Ritterrüstung von dem Patienten getragen werden und über Gelenke miteinander verbunden sind. Zwischen einzelnen der zueinander beweglichen Schalenteile wirken Luftmuskeln als steuerbare Aktuatoren. Über die Art der Ansteuerung der Aktuatoren wird nichts gesagt. Die Bauweise aus schalenartigen Teilen bewirkt, dass die Vorrichtung ziemlich schwer wird, und der Vorgang des An- bzw. Ablegens einigermaßen mühselig ist.

Die US 2003/0223844 A1 zeigt ebenfalls eine Vorrichtung, welche aus mehreren starren, schalenartigen Gliedern besteht, die ähnlich wie Teile einer Ritterrüstung von einer Person getragen werden und die über Gelenke miteinander verbunden sind. Die Vorrichtung dient zur Steuerung eines entfernt, beispielsweise im Weltraum, angeordneten Roboters. Elastisch vorgespannte Bowdenzüge helfen mit, einzelne Glieder gegen die Wirkung der Schwerkraft anzuheben und sie dienen dazu, die Stellung einzelner Glieder zueinander zu messen. Abhängig vom Messergebnis wird ein entfernt angeordneter Roboter bewegt. In einer vorteilhaften Weiterentwicklung werden in Abhängigkeit von den auf den Roboter wirkenden Kräften auch gesteuerte Kräfte zwischen den einzelnen Schalen der Vorrichtung ausgeübt.

Der Erfinder hat sich das Ziel gesetzt, einen Roboterarm zur Verfügung zu stellen, welcher in einer Vielzahl von privaten Haushalten, in der Industrie, sowie in der Medizintechnik anwendbar ist. Gegenüber traditionellen, starren Robotern ist vor allem die Sicherheit zu erhöhen, damit der Roboterarm durch hohe Kräfte oder Anstoßen mit hoher Geschwindigkeit nichts beschädigt und niemanden verletzt. Der Roboterarm muss einfach bedienbar und für eine größere Anzahl von verschiedenen Anwendungen einsetzbar sein. Insbesondere sollder Roboterarm auch als Therapiegerät für die passive und aktive Mobilisation von Gliedmaßen eines Menschen einsetzbar sein. Bei einer therapeutischen Anwendung wird beispielsweise ein muskelschlaffer menschlicher Arm mittels Roboterarm im Raum bewegt.

Die Aufgabe der Erfindung besteht darin einen elektrisch betriebenen Roboterarm bereitzustellen, der folgende Aspekte erfüllt:
Leichtbau: Das Gerät soll einem Leichtbauaspekt genügen, sodass es portabel und komfortabel einsetzbar ist. Gerade im Hinblick auf die technische Umsetzung mit elektrischen Antrieben im Roboterarm besteht darin eine große Herausforderung, da bekannte elektrische Antriebe wesentlich größeres Gewicht als beispielsweise eine Luftmuskel-Variante aufweisen.
Robustheit: Das Abfangen und Dämpfen von Krafteinwirkungen (z.B. Schlägen) auf den Roboterarm ist in der technischen Realisierung mittels Elektromotoren und Getrieben eine von der Erfindung zu lösende Aufgabe, da bekannten elektrischen Antrieben die Möglichkeit der Dämpfung solcher Einwirkungen fehlt.
Passivität: Der Roboterarm soll auch im Bereich der passiven Sicherheit (Selbstschutz) einer Umsetzung via Luftmuskeln nicht nachstehen, sodass bei Fehlfunktionen, die für das System zu hohe Kräfte bedeuten könnten, mittels Sicherheitsmechanismen sämtliche inneren Widerstände ausgeschaltet werden und der Roboterarm keinen Schaden nimmt.
Nachgiebigkeit: Auch im Bereich der aktiven Sicherheit (Fremdschutz) muss der elektrisch betriebene Roboterarm dazu in der Lage sein, eine Nachgiebigkeit aufzuweisen, sodass dem Benutzer kein Schaden zugefügt wird.
Kostengünstig: Der Roboterarm soll möglichst kostengünstig umsetzbar sein. Mit dem Fokus auf verhältnismäßig teuren elektrischen Antrieben, sind Einsparungen besonders auf den Bereich der Sensorik und Regelung konzentriert.
Interaktion: Die Steuerung des Roboterarms soll die von außen auftretenden Kräfte erkennen und der Roboter soll auf diese sowohl passiv (durch seine physikalisch nachgiebige Struktur) als auch aktiv (durch Regelung der Antriebe) reagieren. Die gefahrene Bahn kann dabei von der Sollbahn abweichen bzw. die ursprüngliche Sollbahn verändern.
Kommunikation: Die gemessenen oder errechneten Werte sowie der Roboterzustand stehen über Kommunikationsschnittstellen zur Verfügung. Befehle zum Roboterverhalten sollen ebenfalls über Kommunikationsschnittstellen eingelesen werden. Diese sollen das Verhalten in Echtzeit beeinflussen können.

Die Aufgabe wird durch einen Roboterarm gemäß Anspruch 1 oder 11 gelöst. Unterschiedliche Ausführungsformen und Weiterentwicklungen sind Gegenstand der abhängigen Ansprüche. Gemäß einem Beispiel der Erfindung weist der Roboterarm Folgendes auf: Ein erstes Armsegment und ein zweites Armsegment; einen Motor, der dazu ausgebildet ist eines der Armsegmente zu bewegen; ein Feder-Dämpfer Element, das dazu ausgebildet ist, das erste Armsegment und das zweite Armsegment mechanisch zu koppeln; wenigstens einen Sensor, der dazu ausgebildet ist, eine Relativposition des ersten Armsegments in Bezug auf das zweite Armsegment zu erfassen und ein Sensorsignal auszugeben, das diese Relativposition repräsentiert und eine Steuereinheit, die dazu ausgebildet ist, das Sensorsignal zu erhalten und den Motor abhängig von dem Sensorsignal anzusteuern.

Die Steuereinheit ist weiter dazu ausgebildet ist, den Motor so zu steuern, dass der Arm in eine Sollposition bewegt wird, sofern keine äußere Kraft auf den Roboterarm wirkt. Sofern eine äußere Kraft auf den Roboterarm wirkt, berechnet die Steuereinheit diese Kraft (Störkraft), wobei diese von der Abweichung zwischen einer aktuellen Istposition und der Sollposition abhängt. Auf diese Störkraft kann unterschiedlich reagiert werden, entweder indem die Steuereinheit die Störkraft (durch Aufbringen einer entsprechenden Gegenkraft) kompensiert oder indem der Arm den geringst möglichen (theoretisch Null) Widerstand dieser Störkraft entgegensetzt. Diese beiden Möglichkeiten werden noch genauer erläutert.

Der Roboterarm kombiniert dabei eine passive, durch das Feder-Dämpfer-Element bewirkte Nachgiebigkeit mit einer aktiven, durch die Roboterregelung bewirkte Nachgiebigkeit. Auf langsame Krafteinwirkungen von außen kann der Roboter (inklusive Last) also mit einer regelungstechnisch einstellbaren Kraft-Weg-Kennlinie reagieren. Eine schnelle äußere Krafteinwirkung, z.B. einem Stoß (beispielsweise bedingt durch eine Kollision) kann durch das Feder-/Dämpferelement absorbiert werden. Die Steuerung kann auf die schnelle äußere Krafteinwirkung entsprechend einem anderen Regelgesetz reagieren. Beispielsweise kann ein Gelenk des Roboterarms (oder mehrere Gelenke) "weich" geregelt werden. Das heißt, der Motor wird so angesteuert, dass nur mehr die Gewichtskräfte kompensiert werden, aber einer äußeren Kraftweinwirkung nicht mehr entgegengewirkt wird.

Gemäß einem weiteren Beispiel der Erfindung umfasst der Roboterarm ein erstes Armsegment und mindestens ein zweites Armsegment, einen Motor, der dazu ausgebildet ist eines der Armsegmente zu bewegen, einen Riemen, der dazu ausgebildet ist, das erste Armsegment mit dem zweiten Armsegment mechanisch zu koppeln, einem Feder-Dämpfungs-Element, das dazu ausgebildet ist, eine Bewegung des ersten Armsegments gegenüber dem zweiten Armsegment zu dämpfen, wenigstens einen Sensor, der dazu ausgebildet ist, eine Relativposition des ersten Armsegments in Bezug auf das zweite Armsegment zu erfassen und ein Sensorsignal auszugeben, das diese Relativposition repräsentiert.

Weitere Vorteilhafte Details des mechanischen Aufbaues und vorteilhafte bereitzustellende Eigenschaften der Steuerung des Roboterarmes werden unter Zuhilfenahme der Zeichnungen beschrieben:
- Figur 1: zeigt ein Ausführungsbeispiel eines Roboterarms.
- Figur 2: zeigt eine Modifikation des Ausführungsbeispiels eines Roboterarms aus Figur 1.
- Figur 3: zeigt ein Ausführungsbeispiel eines Roboterarms.
- Figur 4: Figur 4 zeigt eine Modifikation des Ausführungsbeispiels eines Roboterarms aus Figur 3.
- Figur 5: zeigt ein weiteres Ausführungsbeispiel eines Roboterarms.

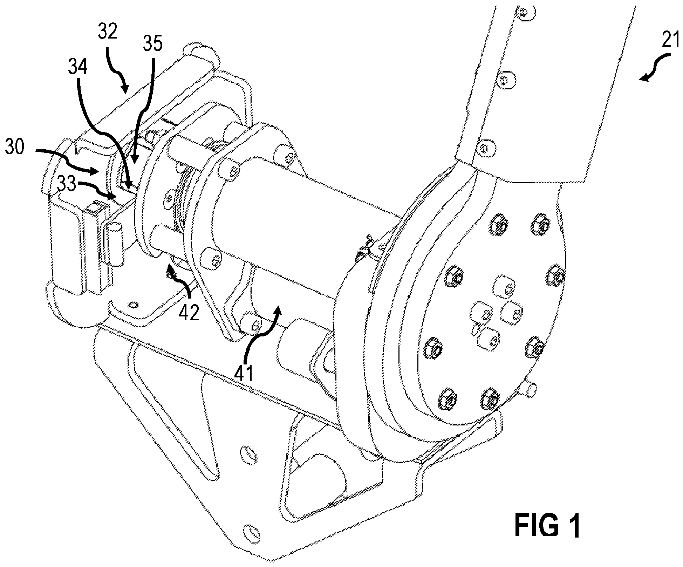

Figur 1 zeigt ein Ausführungsbeispiel eines Roboterarms. In diesem Ausführungsbeispiel sind ein erstes Armsegment 21 und ein zweites Armsegment 32 dargestellt, die von einem elektrischen Motor 41 über Keil- und/oder Zahnriemengetriebe 42 relativ zueinander bewegt werden können. Beispielsweise kann ein Armsegment (Segment 21) durch einen Motor angetrieben werden, oder von einer äußeren Kraft (z.B. menschlicher Arm bei Therapieeinsätzen) bewegt werden. Die zwei Armsegmente in Figur 1 bilden an ihrer Verbindungsstelle ein Kupplungselement 30, über das sie zueinander in einer Ebene verdrehbar sind. Im Ausführungsbeispiel in Figur 1 ist das zweite Armsegment 32 unschwenkbar fest mit einer Basis 22 verbunden.

Beispielsweise kann das zweite Armsegment 32 in diesem Fall die Stütze darstellen, auf der der Roboterarm steht. Das erste Armsegment 21 stellt dagegen den schwenkbaren Teil des Roboterarmes dar. Der Motor 41, der am ersten Armsegment 21 angeordnet ist, bewegt über das Kupplungselement 30 das erste Armsegment 21, das auch durch äußere Einwirkungen (Kräfte) bewegt werden kann, und stützt sich dabei an der Basis 22 ab. Dabei ist der Motor 41 derart ausgebildet, dass er von außen auf das erste Armsegment 21 einwirkenden Kräften entgegenwirken kann und somit einen Schwenkwiderstand (d.h. ein Drehmoment, das den äußeren Kräften entgegenwirkt) erzeugt. Das zweite Armsegment 32 ist im vorliegenden Beispiel sehr kurz und die Basis 22 praktisch direkt am Gelenk angeordnet,

Das erste Armsegment 21 weist an einem Ende ein erstes Kupplungssegment 33 auf, während das zweite Armsegment 32 analog dazu ein zweites Kupplungssegment 35 an seinem Ende aufweist. Unter den Enden der Armsegmente sind die Teile der ersten und zweiten Armsegmente gemeint, die beim Verbinden des ersten Armsegments 21 mit dem zweiten Armsegment 32 über eine Kupplung miteinander gekoppelt werden. Beide Kupplungssegmente 33, 35 bilden ein Kupplungselement 30. An dem ersten Armsegment 21 ist ein Motor 41 starr angeordnet, der beispielsweise über Keil- und/oder Riemenantriebe 42 mit einer Seite des Kupplungselements 30, z.B. dem ersten Kupplungssegment 33 verbunden ist. Die beiden Kupplungssegmente 33, 35 sind dabei zahnförmig derart ausgestaltet, dass sie ineinander greifen wodurch eine Drehung des einen Kupplungssegments in eine Drehung des entsprechenden gegenüberliegenden Kupplungssegments übertragen wird. Die beiden Kupplungssegmente sind durch ein Dämpfungselement 34 (genau genommen ein Feder-Dämpferelement) miteinander mechanisch gekoppelt. Das Dämpfungselement 34 lässt in einem bestimmten, durch die Konstruktion bedingten Winkelbereich eine Verschwenkung der beiden Armsegmente 21, 32 zu. Diese Verschwenkung ist der der Motordrehung überlagert und kann auch bei starr geschaltetem Antrieb erfolgen. Das Dämpfungselement weist auch eine gewisse, materialabhängige Nachgiebigkeit auf, die beispielsweise durch eine Kraft-Weg-Kennlinie (oder Drehmoment-Drehwinkel-Kennlinie) charakterisiert werden kann. Denkbare Materialien für das Dämpfungselement 34 sind beispielsweise Elastomere wie Polyurethan (PUR), Polyamid (PA), Polyetherketon (PEEK) oder in Elastomer eingebettete Federelemente. Im Ausführungsbeispiel in Figur 1 sind die zahnförmigen Kupplungssegmente 33, 35 derart ausgebildet, dass zwischen ihren ineinandergreifenden Zähnen ein Freiraum vorhanden ist. Dieser Freiraum wird durch das Dämpfungselement 34 aufgefüllt, so dass es die Drehbewegung des ersten Kupplungssegments 33 gedämpft auf das zweite Kupplungssegment 35 überträgt. Die Dämpfung erfolgt beispielsweise über Verformung, in diesem Ausführungsbeispiel Quetschung, des Dämpfungselements 34. Die durch das Dämpfungselement 34 bereitgestellte Dämpfung erfolgt bis zu einem gewissen Drehmoment, ab dem die Quetschung ihren maximalen Wert erreicht und die Kupplung ab diesem Drehmoment wieder wie eine ungedämpfte Kupplung überträgt.

Wird nun ein Armsegment entsprechend geschwenkt, was für das entsprechende Kupplungssegment konstruktionsbedingt eine Drehung um einen gewissen Winkel bedeutet, dämpft das Dämpfungselement 34 den Übertrag des Drehmoments auf das andere Kupplungssegment bis das Drehmoment den kritischen Wert erreicht, ab dem das Dämpfungselement 34 maximal verformt (gequetscht) ist. Abhängig von der Materialstruktur und Konstruktion kann die maximal erreichbare Verformung bei wenigen Nm (Newtonmeter) bis einigen Tausend Nm erreicht werden. Beispielsweise sind Drehwinkel, bei denen gedämpft wird im Bereich von -5° bis +5° (total 10°) oder im Bereich von -7,5° bis + 7,5° (total 15°). Dadurch ist eine gewisse Nachgiebigkeit für das System gegeben, welche gerade bei Anwendungen des Roboterarmes zu Therapiezwecken gewünscht ist. Bei einer herkömmlichen Kupplung zweier Armsegmente, wovon eines mit einem Motor gekoppelt ist, liegt praktisch ein starres Verhalten der Schwenkarme bei ausgeschaltetem Antrieb vor. Ziel ist es dagegen, dem Benutzer eine gewisse Nachgiebigkeit zu bieten, die kleine Bewegungen zulässt. Des Weiteren ist eine selektive Nachgiebigkeit erwünscht, die nicht nur grundsätzlich leicht nachgibt, sondern eine intelligente Steuerung des Antriebs erlaubt. Solche Steuerungen sind dann wichtig, wenn das System schnell den kompletten Widerstand gegen eine von außen wirkende Kraft ausschalten soll (z.B. im Fall von Spastiken im Arm des Benutzers). Dazu weist das Kupplungselement 30 neben den Kupplungssegmenten 33, 35 ein Sensorelement 50 auf (in Fig. 1 nicht dargestellt), das einen oder mehrere (Einzel-) Sensoren umfassen kann, wobei z.B. ein erster Sensor 51 mit dem ersten Kupplungssegment 33 und ein zweiter Sensor 52 mit dem zweiten Kupplungssegment 35 fest verbunden ist. Das Sensorelement 50 ist dazu ausgebildet, eine Relativposition des ersten Armsegments 21 in Bezug auf das zweite Armsegment 32 zu erfassen und ein Sensorsignal auszugeben, das diese Relativposition repräsentiert. Zur Verarbeitung des Sensorsignals umfasst der Roboterarm zudem eine Steuereinheit (nicht dargestellt), die dazu ausgebildet ist, das vom Sensorelement ausgegebene Sensorsignal zu erhalten und zu verarbeiten und den Motor 41 abhängig vom Sensorsignal anzusteuern. Beispielsweise kann so eine einwirkende Kraft auf das erste Armsegment 21 an Hand von Kennlinien der Verformungseigenschaften des verwendeten Dämpfungsmaterials (Kraft-Weg-Kennlinien, Momenten-Winkel-Kennlinien) aus der relativen Verdrehung der Sensorelemente 51, 52 und damit der Kupplungssegmente 33, 35 über das wirkende Drehmoment errechnet werden. Erster Bestandteil der selektiven Nachgiebigkeit des Roboterarms ist also die Messung der einwirkenden Kraft auf dem Roboterarm, bzw. des entsprechenden einwirkenden Drehmoments auf die Kupplung und damit auf den elektrischen Motor. Ein weiterer Bestandteil der selektiven Nachgiebigkeit ist neben der bereits erwähnten Stärke der Krafteinwirkung deren Geschwindigkeit, d.h. die Geschwindigkeit mit der von außen eine Kraft auf den Roboterarm einwirkt. Zur Bestimmung der Geschwindigkeit der Einwirkung ist die Steuereinheit dazu ausgebildet, die zeitliche Ableitung der Relativposition des ersten Armsegments 21 in Bezug auf das zweite Armsegment 32 zu errechnen. Des Weiteren kann z.B. über eine Kraftmessdose die im Gelenk wirkende Kraft (oder Drehmoment) gemessen werden. Die Steuerung kann auch daraus die Größe der von außen wirkenden Kraft berechnen.

Aus den gemessenen Daten lässt sich die Geschwindigkeit der Einwirkung bestimmen und somit klassifizieren, ob die (Stör-) Kraft schnell oder langsam auf den Roboterarm aufgebracht wird. In Kombination mit der Ermittlung der Stärke der Kraft lässt sich also eine Aussage darüber treffen, ob der Benutzer eine Kraft in sehr kurzer Zeit aufbringt, was zum Beispiel bei einer spastischen Kontraktion des menschlichen Armes während einer therapeutischen Sitzung gegeben ist. Die Steuereinheit kann in diesem Fall bevor das Dämpfungselement 35 an seine Verformungsgrenze gelangt das Gelenk bzw. den Motor 41 komplett "weich" schalten oder sogar gegen die Richtung der Verformungskräfte drehen, so dass praktisch kein Widerstand mehr vorhanden ist und für den Benutzer keine Verletzungsgefahr besteht. Wird die Krafteinwirkung auf die Kupplung dagegen langsam erhört, kann die Steuereinheit das Getriebe bzw. den Motor 41 starr belassen und entsprechend den Widerstand anpassen. Ein Gelenk (oder den ganzen Roboter) "weich" (nachgiebig) schalten bedeutet, dass die Regelung in einem Modus schaltet, in dem der Antrieb in dem betreffenden Gelenk so geregelt wird, dass die Gewichtskräfte des Roboters kompensiert werden, im Übrigen aber auf eine durch äußere Krafteinwirkung hervorgerufene Störung (Abweichung von einer Sollposition) nicht mehr reagiert wird. Ein Roboterarmsegment mit einem derartig geregelten Gelenk gibt jeglicher Krafteinwirkung von außen nach und bleibt stehen, sobald keine Kraft (außer der Gewichtskraft) mehr von außen auf den Roboterarm wirkt.

Dabei ist anzumerken, dass die im Gelenk wirkende Kraft (bzw. Drehmoment) nicht vollständig als "Störkraft" interpretiert wird. Zuerst wird das Drehmoment dazu genutzt, um dem Roboterarm selbst zu bewegen (d.h. zu beschleunigen) bzw. statisch das Armgewicht zu halten. Sollte das einwirkende Drehmoment einen Anteil aufweisen, der darüber hinausgeht, wird dieser Anteil als die Störkraft interpretiert (d.h. die Kraft der Einwirkung vom außen), an Hand derer die selektive Nachgiebigkeit gesteuert wird.

Es versteht sich, dass für die Anwendung beliebig viele Armsegmente mit Kupplungselementen gemäß dem Ausführungsbeispiel aneinander angebracht werden können.

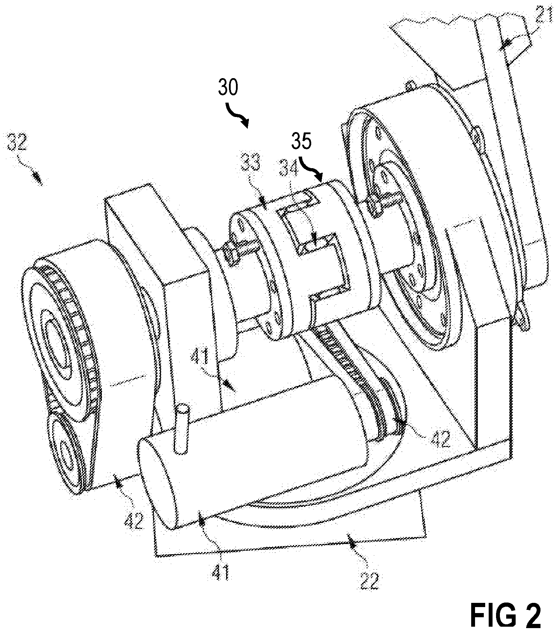

Figur 2 zeigt eine Modifikation des Ausführungsbeispiels eines Roboterarms aus Figur 1. Im Gegensatz zum Ausführungsbeispiel in Figur 1 ist beim Ausführungsbeispiel in Figur 2 der Motor 41 nicht an dem ersten Armsegment 21 starr angeordnet, sondern ist mit dem zweiten Armsegment 32 verbunden. Der Motor 41 bewegt das erste Armsegment 21 damit nicht "direkt" über die Kupplung, sondern "indirekt" über einen Riementrieb 42. Das Kupplungselement 30 ist dabei Bestandteil des Riementriebs 42 . Die Ausgestaltung des Kupplungselements 30 und des Sensorelements 50 entspricht dabei dem Ausführungsbeispiel aus Figur 1.

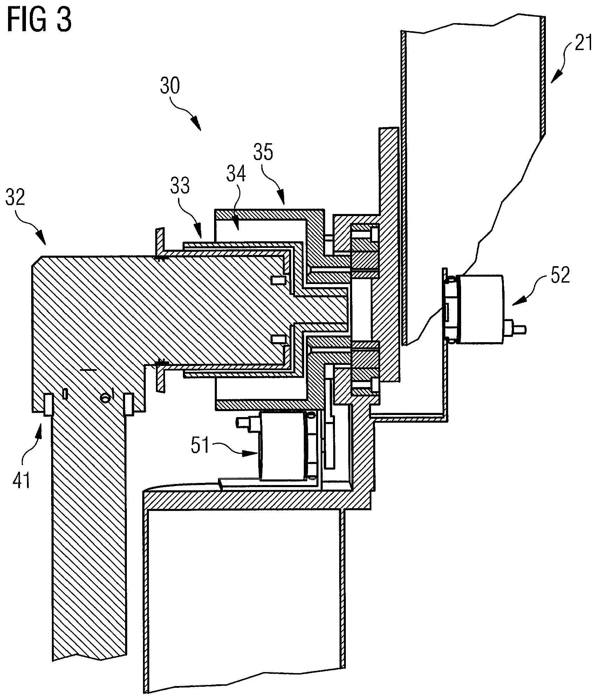

Figur 3 zeigt ein weiteres Ausführungsbeispiel eines Roboterarms. In diesem Ausführungsbeispiel sind die Kupplungssegmente 33, 35, d.h. die Enden des ersten Armsegments 21 und des zweiten Armsegments 32 zylinderförmig bzw. hülsenartig ausgestaltet. Das erste Kupplungssegment 33 ist durch die erste Hülse und das zweite Kupplungssegment 35 durch die zweite Hülse gegeben, wobei die erste Hülse 33 einen geringeren Durchmesser als die zweite Hülse 35 aufweist. Die erste Hülse 33 kann daher in die zweite Hülse 35 geschoben werden. Die beiden ineinander geschobenen Hülsen (Kupplungssegmente) bilden das Kupplungselement 30 des Ausführungsbeispiels. Analog zu den vorgehenden Ausführungsbeispielen von Figuren 1 und 2 sind die Kupplungssegmente (Hülsen) 33, 35 derart ausgestaltet, dass bei ineinander geschobenen Hülsen ein Freiraum entsteht, der durch das Dämpfungselement 34 aufgefüllt wird. Das erste Kupplungssegment (die erste Hülse) 33 ist dabei fest mit dem am ersten Armsegment 21 starr angeordneten Motor 41 verbunden, während das zweite Kupplungssegment (die zweite Hülse) 35 fest mit dem zweiten Armsegment 32 verbunden ist. Das Dämpfungselement 34 zwischen den beiden ineinander geschobenen Hülsen koppelt das erste Kupplungssegment 33 und das zweite Kupplungssegment 35 mechanisch miteinander. Dabei weist es analoge Dämpfungseigenschaften im Bezug auf den Drehmomentübertrag auf wie das Dämpfungselement im Kupplungselement im Ausführungsbeispiel in Figur 1. Denkbare Materialien für das Dämpfungselement 34 sind beispielsweise Elastomere wie PUR, PA, PEEK. Die Verformung des Dämpfungsmaterials unterscheidet sich dabei jedoch vom Ausführungsbeispiel in Figur 1. Handelt es sich bei Figur 1 um eine Zug/Druckbelastung, steht das Dämpfungselement im Ausführungsbeispiel von Figur 3 unter einer Scherbelastung. Analog zu den vorigen Ausführungsbeispielen umfasst das Kupplungselement ein Sensorelement 50 umfassend einen ersten Sensor 51 und einen zweiten Sensor 52, wobei der erste Sensor 51 starr am ersten Kupplungssegment 33 und der zweite Sensor 52 starr am zweiten Kupplungssegment 35 angeordnet ist. Die Sensoren arbeiten in diesem Ausführungsbeispiel in gleicher Weise wie in vorigen Ausführungsbeispielen, indem sie die relative Position zueinander bestimmen und ein repräsentatives Sensorsignal ausgeben. Analog zu den vorigen Ausführungsbeispielen weist das Ausführungsbeispiel in Figur 3 ebenfalls eine Steuereinheit (nicht dargestellt) auf, die dazu ausgebildet ist, das Sensorsignal des/der Sensorelements/Sensorelemente zu erhalten, zu verarbeiten und die zeitliche Ableitung der Relativposition des ersten und zweiten Sensors zu berechnen, um den Motor 41 anzusteuern.

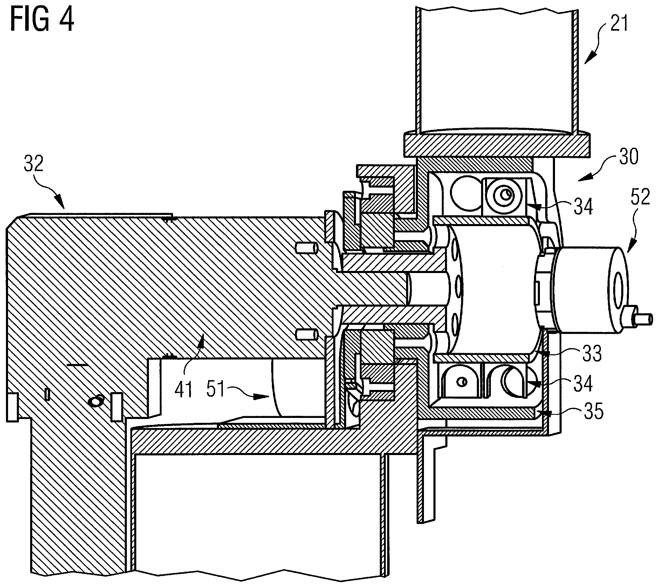

Figur 4 zeigt eine Modifikation des Ausführungsbeispiels eines Roboterarms aus Figur 3. Im Gegensatz zum Ausführungsbeispiel in Figur 3 ist beim Ausführungsbeispiel in Figur 4 das Dämpfungselement 34 durch eine oder mehrere in Elastomer eingebettete Federn gegeben. Diese Federn sind derart in dem Freiraum zwischen dem ersten und dem zweiten Kupplungssegment 33, 35 angeordnet, dass eine Verdrehung der beiden Kupplungssegmente zueinander die Federn komprimiert. Erreicht die Spannung einen kritischen, maximalen Wert (Feder vollständig zusammengedrückt) erfolgt der Drehmomentübertrag wieder unmittelbar als wäre er ohne Dämpfung. Die selektive Nachgiebigkeit kann somit auch mit Federn und einem dazugehörigen Dämpfungsmaterial erreicht werden. Die Sensorik und Steuerung erfolgt analog zum Ausführungsbeispiel in Figur 3. Eine weitere mechanisch erzeugbare Selektivität der Reaktion kann bei der Implementierung mit Federn durch Hintereinanderschaltung von Federn mit unterschiedlicher Steifigkeit erfolgen. Damit lässt sich ein speziell gewünschtes Verhalten durch eine veränderliche Gesamtfederkennlinie erreichen.

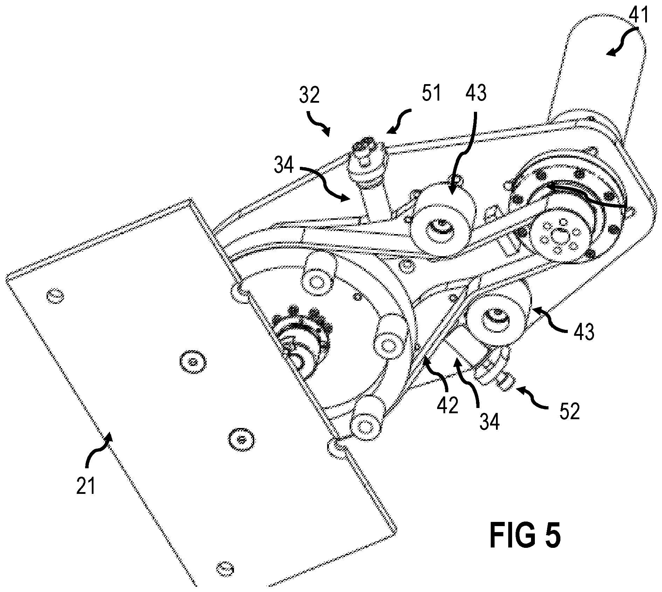

Figur 5 zeigt ein weiteres Ausführungsbeispiel der Erfindung. Der Unterschied zu den bisherigen Ausführungsbeispielen besteht hierbei darin, dass das Dämpfungselement nicht mehr zwischen den beiden Kupplungssegmenten der Armsegmente angeordnet ist. Stattdessen sind beide Armsegmente in diesem Ausführungsbeispiel über einen Riemen 42 miteinander verbunden. Der Motor 41 ist dabei nach wie vor starr mit einem Armsegment (Segment 32) verbunden. Der Riemen 42 wird mittels Spannelementen 43, im Ausführungsbeispiel Spannrollen, gespannt. Auf die Spannelemente 43 des Riemens 42 drücken dabei die Feder-Dämpfungs-Elemente 34. Das Funktionsprinzip erfolgt dabei analog zu den vorigen Ausführungsbeispielen. Wird ein Armsegment geschwenkt, wirkt ein Drehmoment auf den Motor 41, wodurch sich der Riemen 42 an einem der beiden Spannelemente 43 zusätzlich spannt, wodurch diese Spannelemente 43 entgegen ihrer ursprünglichen Spannrichtung nach außen gedrückt werden. Diese Bewegung nach außen wird von den Dämpfungselementen 34, die hinter den Spannelementen 43 angeordnet sind, entsprechend gedämpft. Gleichzeitig wird der relative Winkel der Spannelemente 43 zueinander mittels eines Sensorelements gemessen, woraus das wirkende Drehmoment berechnet werden kann. Dabei sind die Dehnungskennlinien des Riemens zu beachten und in die Rechnung miteinzubeziehen. Das Sensorelement umfasst dabei einen ersten Sensor 51 und einen zweiten Sensor 52, die hinter den Dämpfungselementen 34 angeordnet sind.

Die Implementierung eines Roboterarmes mit elektrischen Motoren als Aktuatoren bringt diverse Vorteile. Bei den in der pneumatischen Lösung verwendeten Luftmuskeln gibt es ein unerwünschtes, nachteiliges Verhalten, wenn jemand gezielt und stark auf den Roboterarm drückt. Bei solch einer Einwirkung entsteht ein Überdruck in den Luftmuskeln und der Roboter schnalzt beim Wegfall der einwirkenden Kraft (z.B. abruptes Loslassen) unkontrolliert zurück.

Aus Sicherheitsgründen arbeitet die Regelung nur langsam und ist deswegen nicht in der Lage, diese Reaktion des Roboterarmes abzufangen. Der elektrische Antrieb löst dieses Problem. Das verwendete passiv-weiche Element im Getriebe ermöglicht nur einige Grad an passiver "Federung". Die verbleibende Nachgiebigkeit kommt aus der Regelung (eine derartige Regelung wird auch als Impedanzregelung bezeichnet). Aus diesem Grund tritt die ungewollte und vorher unkontrollierbare Reaktion nicht auf. Die Kombination aus "regelungstechnischer" Nachgiebigkeit und passiver Nachgiebigkeit (durch mechanische Feder-/Dämpfungselemente) weisen die beschriebenen Nachteile der Luftmuskel-Antriebe (auch Balgzylinder) nicht auf. Schnelle Krafteinwirkungen von außen, welche von der Regelung nicht kompensiert werden können, werden von den Feder-Dämpfungs-Elementen absorbiert. Langsame Einwirkungen von außen (z.B. Interaktion mit einem menschlichen Benutzer) werden regelungstechnisch verarbeitet, wobei praktisch eine beliebige Kraft-Weg-Kennlinie ("Federkennlinie") einstellbar ist.

Des Weiteren sind Luftmuskeln nur in einer Richtung aktiv weswegen diese immer als Antagonisten verwendet werden, d.h. es wird immer ein Gegenpart benötigt, der eine Kraft in die entgegengesetzte Richtung aufbringt Dabei gibt es immer das Risiko eines Bruchs eines ziehenden Elementes. In so einem Fall würde der Gegenspieler mit voller Wucht in die entgegengesetzte Richtung ziehen. Bei der elektrischen Lösung kann als Vorsorge gegen einen eventuellen Motor-/ Regelungsausfall ein hemmendes Getriebe verwendet werden, dass eine Bewegung mechanisch unterbindet. Die hier beschriebenen Ausführungsbeispiele weisen damit gewisse Vorteile von Luftmuskel-Antrieben auf, währen manche derer Nachteile vermieden werden.

In der therapeutischen Anwendung soll der Roboterarm generell auf die Rückwirkung des Patienten reagieren. Darin besteht der große Unterschied zu typischen starren Robotern. Damit sind "langsame" Verläufe gemeint. Beispielsweise wird der Muskel des Patienten bis zu einem Punkt gedehnt, an dem die Schmerzgrenze liegt. An diesem Punkt wird der Arm des Patienten schleichend verspannt. In dieser Situation erweist sich eine Implementierung mittels Luftmuskeln als unvorteilhaft, da diese von ihrer Charakteristik her zu weich sind, wodurch bei jeglichen Bewegungen des Oberkörpers des Patienten (gewollt oder ungewollt) unerwünschte Schwingungen im Roboterarm auftreten. Die Implementierung mittels eines elektrischen Antriebs erlaubt es in solch einem Fall, diese Problematik zu lösen, da die Regelung viel direkter eingreifen kann und konstruktionsbedingt auch nur wenige Grad an passiver und damit unkontrollierter Nachgiebigkeit möglich sind.

In der Folge werden einige Aspekte der vorliegenden Erfindung zusammengefasst, wobei dies nicht als vollständige Aufzählung aufzufassen ist. Ein Roboterarm besteht gemäß einem Beispiel der Erfindung aus mindestens zwei Segmenten (z.B. Segment 21 und 32, siehe Fig. 1 bis 5). Beide Segmente 21, 32 sind über ein Gelenk schwenkbar verbunden. Eines der Segmente (z.B. Segment 32 in Fig. 1) kann mit einer (z.B. ortsfesten) Basis 22 starr verbunden sein. Alternativ können auch mehr als zwei Segmente vorgesehen sein. Die beiden Segmente sind über einen Antrieb, der einen Elektromotor 41 aufweist, mechanisch gekoppelt, sodass dieser in das Gelenk ein Drehmoment einbringen und die beiden Segmente 21, 32 gegeneinander verschwenken kann. Der Antrieb kann auch ein mechanisches Getriebe aufweisen und umfasst jedenfalls eine elastische Kupplungsanordnung 30. Diese umfasst zwei Kupplungssegmente 33, 35, die über ein Dämpfungselement 34 gekoppelt sind, sodass eine Relativbewegung zwischen den beiden Kupplungselementen möglich ist. Die Kupplung kann auch als Riementrieb mit Spannrollen realisiert sein. Die (gedämpft) federnd gelagerten Spannrollen ermöglichen die erwähnte Relativbewegung.

Die Relativposition (z.B. der Verdrehwinkel) der beiden Segmente wird gemessen und der Messwert einer Steuereinheit zugeführt. Diese ist dazu ausgebildet, den Motor 41 so zu steuern, dass der Roboterarm in eine Sollposition bewegt wird, sofern keine äußere Kraft auf diesen wirkt. Sofern doch eine äußere Kraft (Störkraft) auf den Roboterarm wirkt, erzeugt der Motor eine von der Abweichung zwischen einer aktuellen Istposition und der Sollposition abhängige Gegenkraft entsprechend einer einstellbaren Kraft-Weg-Kennlinie (der Weg wäre die Abweichung zwischen Soll- und Istposition).

Die Steuereinheit kann auch die Geschwindigkeit, mit der die Störkraft aufgebracht wird, erfassen. Ändert sich die Relativposition sehr rasch (schneller als ein Grenzwert), wird die Störung zunächst von dem Feder-Dämpfer-Element absorbiert und die Steuereinheit kann die Kraft-Weg-Kennlinie anpassen. Ist die Änderung der Relativposition zu schnell, kann beispielsweise eine (sehr) flache Kraft-Weg-Kennlinie eingestellt werden, sodass der Motor der Störkraft praktisch keinen Widerstand mehr entgegensetzt, jedoch die Gewichtskräfte kompensiert. Ändert sich die Relativposition langsam (im Vergleich zur Zeitkonstanten der in der Steuereinheit implementierten Regelung), wird die eine andere Kraft-Weg-Kennlinie verwendet. Eine Absorption der Störung durch das Feder-Dämpferelement erfolgt nicht (oder nur in geringem Maße), da die Nachgiebigkeit des Roboterarms in erster Linie von der Regelung bestimmt wird.

## Patentansprüche

1. Roboterarm, der aufweist:
ein erstes Armsegment (21) und mindestens ein zweites Armsegment (32);
einen Motor (41), der dazu ausgebildet ist, eines der Armsegmente (21) relativ zu dem jeweils anderen Armsegment (32) zu bewegen;
ein Dämpfungselement (34), das das erste Armsegment (21) und das zweite Armsegment (32) mechanisch koppelt;
wenigstens einen Sensor (50), der dazu ausgebildet ist, eine Relativposition des ersten Armsegments (21) in Bezug auf das zweite Armsegment (32) zu erfassen und ein Sensorsignal auszugeben, das diese Relativposition repräsentiert;
eine Steuereinheit, die dazu ausgebildet ist, das Sensorsignal zu erhalten und den Motor (41) abhängig von dem Sensorsignal anzusteuern,
wobei die Steuereinheit weiter dazu ausgebildet ist, den Motor (41) so zu steuern, dass der Roboterarm in eine Sollposition bewegt wird, sofern keine äußere Kraft auf den Roboterarm wirkt, und dass, sofern eine äußere Kraft auf den Roboterarm wirkt, der Motor (41) eine von der Abweichung zwischen einer aktuellen Istposition und der Sollposition abhängige Gegenkraft erzeugt, **dadurch gekennzeichnet,**
**dass** die Steuereinheit einen Regler aufweist, der eine vordefinierten Zeitkonstante aufweist, sodass im Vergleich zu der Zeitkonstante schnelle Veränderungen äußerer Kräfte auf den Roboterarm von dem Dämpfungselement (34) absorbiert werden..

2. Roboter nach Anspruch 1, bei dem die Gegenkraft abhängig von der Höhe der von außen wirkenden Kraft sowie abhängig von der Höhe deren Veränderung ist.

3. Roboter nach Anspruch 1 oder 2, bei dem die Steuereinheit dazu ausgebildet ist, eine Veränderung der Relativposition und/oder der Kraft zu messen und abhängig davon eine Kennlinie auszuwählen, die den Zusammenhang zwischen Gegenkraft und Abweichung zwischen Istposition und Sollposition charakterisiert.

4. Roboter nach Anspruch 3, bei dem die Kennlinie flach ist, sodass praktisch keine Gegenkraft erzeugt wird, wenn die von außen wirkenden Kraft und/oder deren Veränderung vordefinierte Schwellwerte übersteigen.

5. Roboterarm nach einem der Ansprüche 1 bis 4, bei dem das Dämpfungselement (34) ein Elastomer ist.

6. Roboterarm nach einem der Ansprüche 1 bis 4, bei dem das Dämpfungselement (34) eine oder mehrere in Elastomer eingebettete Federn aufweist.

7. Roboterarm nach einem der Ansprüche 1 bis 6, bei dem das erste und das zweite Armsegment (21, 32) an zu koppelnden Enden derart ausgebildet ist, dass die Enden der Armsegmente (21, 32) ineinander geschoben werden können und über das Dämpfungselement (34) mechanisch miteinander gekoppelt sind, wobei das erste Armsegment (21) einen geringeren Durchmesser aufweist als das zweite Armsegment (32).

8. Roboterarm nacheinem der Ansprüche 1 bis 7, bei dem der Motor (41) am ersten Armsegment (21) angeordnet ist, der das zweite Armsegment (32) über eine Kupplung (30) bewegt, wobei das Dämpfungselement (34) zwischen zwei Kupplungssegmenten (33, 35) der Kupplung (30) angeordnet ist.

9. Roboterarm nach einem der Ansprüche 1 bis 8, bei dem das Dämpfungselement (34) durch einen Riemen (42) gebildet wird, der über eine oder mehrere Spannrollen (43) gespannt wird.

10. Roboterarm nach einem der Ansprüche 1 bis 9, wobei die Nachgiebigkeit des Roboterarms im Wesentlichen von einem in der Steuereinheit enthaltenen Regler bestimmt wird, wenn die externen Kräfte sich langsam ändern, und wobei der Regler eine einstellbare Kraft-Weg-Kennline anwendet.

11. Ein Verfahren zum Steuern eines Roboterarms, der zumindest ein erstes Armsegment (21) und ein zweites Armsegment (32) aufweist, die über ein Dämpfungselement (34) mechanisch gekoppelt und mittels eines Motors (41) relativ zueinander bewegbar sind; das Verfahren umfasst:
Messen einer Relativposition des ersten Armsegments (21) relativ zum zweiten Armsegment (32);
Regeln der Relativposition des ersten Armsegments (21) relativ zum zweiten Armsegment (32) mittels Ansteuern des Motors (41) abhängig von der gemessenen Relativposition,
sodass der Roboterarm in eine Sollposition bewegt wird, sofern keine äußere Kraft auf den Roboterarm wirkt, und
sodass mittels des Motors (41) eine Gegenkraft erzeugt wird, die von der Abweichung zwischen einer aktuellen Istposition und der Sollposition abhängt, sofern eine äußere Kraft auf den Roboterarm wirkt, **dadurch gekennzeichnet,**
**dass** das Regeln der Relativposition gemäß einer vordefinierten Zeitkonstante geschieht, sodass im Vergleich zu der Zeitkonstante schnelle Veränderungen äußerer Kräfte auf den Roboterarm von dem Dämpfungselement (34) absorbiert werden.

12. Verfahren gemäß Anspruch 11, bei dem die Gegenkraft auch abhängig von der Höhe der von außen wirkenden Kraft sowie abhängig von der Höhe deren Veränderung ist.

13. Verfahren gemäß Anspruch 11 oder 12, das weiter umfasst:
Messen einer Veränderung der Relativposition und/oder der äußeren Kraft, und, abhängig davon,
Auswählen einer Kennlinie, die den Zusammenhang zwischen Gegenkraft und Abweichung zwischen Istposition und Sollposition charakterisiert.

14. Verfahren gemäß Anspruch 13,
wobei, wenn die äußere Kraft und/oder deren Veränderung vordefinierte Schwellwerte übersteigen, eine flache Kennlinie ausgewählt wird, sodass praktisch keine Gegenkraft erzeugt wird.

## Claims

1. Robot arm comprising:
a first arm segment (21) and at least one second arm segment (32);
a motor (41), which is designed to move one of the arm segments (21) relative to the corresponding other arm segment (32);
a damping element (34), which couples mechanically the first arm segment (21) and the second arm segment (32);
at least one sensor (50), which is designed to detect a relative position of the first segment arm (21) with regard to the second segment arm (32) and to output a sensor signal that represents said relative position;
a control unit, which is designed to receive the sensor signal and to pilot the motor (41) depending on the sensor signal,
wherein the control unit is further designed to control the motor (41) in such a way that the robot arm is moved to a target position, provided that no external force acts on the robot arm, and that, provided that an external force acts on the robot arm, the motor (41) generates a counterforce which depends on the difference between a current actual position and the target position,
**characterized in that**
the control unit comprises a controller having a predefined time constant, so that changes of external forces on the robot arm, which are rapid in comparison to the time constant, are absorbed by the damping element (34).

2. Robot arm according to claim 1, wherein the counterforce is dependent on how high the force acting from the outside is as well as on how significant its change is.

3. Robot arm according to claim 1 or 2, wherein the control unit is designed to measure a change of the relative position and/or of the force and, depending on that, to choose a characteristic curve, which characterizes the relationship between counterforce and difference between actual position and target position.

4. Robot arm according to claim 3, wherein the characteristic curve is flat, so that practically no counterforce is generated, when the force acting from the outside and/or its change exceed predefined threshold values.

5. Robot arm according to one of the claims 1 to 4, wherein the damping element (34) is an elastomer.

6. Robot arm according to one of the claims 1 to 4, wherein the damping element (34) comprises one or several springs embedded in elastomer.

7. Robot arm according to one of the claims 1 to 6, wherein the first and the second arm segments (21, 32) are designed at ends to be coupled such that the ends of the arm segments (21, 32) can be pushed into one another and are coupled mechanically to each other via the damping element (34), wherein the first arm segment (21) has a smaller diameter than the second arm segment (32).

8. Robot arm according to one of the claims 1 to 7, wherein the motor (41) is arranged at the first arm segment (21), which moves the second arm segment (32) via a coupling (30), wherein the damping element (34) is arranged between two coupling segments (33, 35) of the coupling (30).

9. Robot arm according to one of the claims 1 to 8, wherein the damping element (34) is formed by a belt (42), which is tensioned via one or several tension rollers (43).

10. Robot arm according to one of the claims 1 to 9, wherein the resilience of the robot arm is essentially determined by a controller contained in the control unit, when the external forces change slowly, and wherein the controller uses a variable force-path characteristic curve.

11. Method for controlling a robot arm having at least a first arm (21) and a second arm (32), which are coupled mechanically via a damping element (34) and can be moved relative to each other using a motor (41); said method comprising:
measuring a relative position of the first arm segment (21) relative to the second arm segment (32);
controlling the relative positon of the first arm segment (21) relative to the second arm segment (32) by piloting the motor (41) depending on the measured relative position,
so that the robot arm is moved to a target position, provided that no external force acts on the robot arm, and
so that a counterforce, which depends on the difference between an actual position and the target position, is generated using the motor (41), provided that an external force acts on the robot arm,
**characterized in that**
the control of the relative position happens according to a predefined time constant, so that changes of external forces on the robot arm, which are rapid in comparison to the time constant, are absorbed by the damping element (34).

12. Method according to claim 11, wherein the counterforce is also dependent on how high the force acting from the outside is as well as on how significant its change is.

13. Method according to one of the claims 11 or 12, further comprising:
measuring a change of the relative position and/or of the external force, and, depending on that,
choosing a characteristic curve, which characterizes the relationship between the counterforce and the difference between actual position and target position.

14. Method according to claim 13, wherein, when the external force and/or its change exceed predefined threshold values, a characteristic curve is chosen so that practically no counterforce is generated.

## Revendications

1. Bras de robot comprenant :
un premier segment de bras (21) et au moins un second segment de bras (32) ;
un moteur (41) qui est adapté pour bouger un des segments de bras (21) relativement à l'autre bras de segment (32) correspondant ;
un élément d'amortissement (34) qui couple mécaniquement le premier segment de bras (21) et le second segment de bras (32) ;
au moins un capteur (50) qui est adapté pour détecter une position relative du premier segment de bras (21) par rapport au second segment de bras (32) et à délivrer en sortie un signal du capteur qui représente ladite position relative ;
une unité de contrôle qui est adaptée pour recevoir le signal du capteur et pour piloter le moteur (41) en fonction du signal du capteur,
l'unité de contrôle étant en outre adaptée pour contrôler le moteur (41) de telle manière que le bras de robot est déplacé vers une position souhaitée, dans la mesure où aucune force extérieure n'agit sur le bras de robot, et que, dans la mesure où une force extérieure agit sur le bras de robot, le moteur (41) génère une contre-force qui dépend de la différence entre la position réelle actuelle et la position souhaitée,
**caractérisé en ce que**
l'unité de contrôle comprend un régulateur comprenant une constante de temps prédéfinie, de sorte que des changements de forces extérieures exercées sur le bras de robot qui sont rapides en comparaison de la constante de temps sont absorbés par l'élément d'amortissement (34).

2. Bras de robot selon la revendication 1, la contre-force étant dépendante du niveau de la force qui agit depuis l'extérieur ainsi que de l'ampleur du changement de celle-ci.

3. Bras de robot selon l'une des revendications 1 ou 2, l'unité de contrôle étant adaptée pour mesurer un changement de la position relative et/ou de la force et pour choisir une courbe caractéristique, qui caractérise la relation entre contre-force et différence entre position réelle et position souhaitée.

4. Bras de robot selon la revendication 3, la courbe caractéristique étant plate, de sorte que pratiquement aucune contre-force n'est générée, quand la force agissant depuis l'extérieur et/ou le changement de celle-ci dépassent des valeurs seuil prédéfinies.

5. Bras de robot selon l'une des revendications 1 à 4, l'élément d'amortissement (34) étant un élastomère.

6. Bras de robot selon l'une des revendications 1 à 4, l'élément d'amortissement (34) comportant un ou plusieurs ressorts intégrés dans de l'élastomère.

7. Bras de robot selon l'une des revendications 1 à 6, le premier et le second segment de bras (21, 32) étant formés à des extrémités qui doivent être couplées de telle façon que les extrémités des segments de bras (21, 32) peuvent s'emboîter l'une dans l'autre et sont couplées mécaniquement par l'intermédiaire de l'élément d'amortissement (34), le premier segment de bras (21) ayant un diamètre inférieur à celui du second segment de bras (32).

8. Bras de robot selon l'une des revendications 1 à 7, le moteur (41) étant disposé sur le premier segment de bras (21), qui bouge le second segment de bras (32) par l'intermédiaire d'un couplage (30), l'élément d'amortissement (34) étant disposé entre deux segments de couplage (33, 35) du couplage (30).

9. Bras de robot selon l'une des revendications 1 à 8, l'élément d'amortissement (34) étant formé par une courroie (42), qui est tendue par le biais d'un ou plusieurs rouleaux de tension (43).

10. Bras de robot selon l'une des revendications 1 à 9, la flexibilité du bras de robot étant pour l'essentiel déterminée par un régulateur contenu dans l'unité de contrôle, quand les forces externes changent lentement, et le régulateur utilisant une courbe force/course réglable.

11. Procédé de commande d'un bras de robot comprenant au moins un premier segment de bras (21) et un second segment de bras (32), qui sont mécaniquement couplés par l'intermédiaire d'un élément d'amortissement (34) et sont déplaçables par un robot l'un par rapport à l'autre ; le procédé comprenant :
la mesure d'une position relative du premier segment de bras (21) par rapport au second segment de bras (32) ;
le réglage de la position relative du premier segment de bras (21) par rapport au second segment de bras (32) en pilotant le moteur (41) en fonction de la position relative mesurée,
si bien que le bras de robot est déplacé vers une position souhaitée, dans la mesure où aucune force extérieure n'agit sur le bras de robot, et
si bien qu'une contre-force est générée à l'aide du moteur (41), laquelle force dépend de la différence entre la position réelle actuelle et la position souhaitée, dans la mesure où une force extérieure agit sur le bras de robot,
**caractérisé en ce que**
le réglage de la position relative se produit selon une constante de temps prédéfinie, de sorte que des changements de forces extérieures exercées sur le bras de robot qui sont rapides en comparaison de la constante de temps sont absorbés par l'élément d'amortissement (34).

12. Procédé selon la revendication 11, la contre-force étant également dépendante du niveau de la force qui agit depuis l'extérieur ainsi que de l'ampleur du changement de celle-ci.

13. Procédé selon l'une des revendications 11 ou 12, comprenant en outre :
la mesure d'un changement de la position relative et/ou de la force extérieure, et, en fonction de celle-ci,
le choix d'une courbe caractéristique, qui caractérise la relation entre contre-force et différence entre position réelle et position souhaitée.

14. Procédé selon la revendication 13,
une courbe caractéristique plate étant choisie, de sorte que pratiquement aucune contre-force n'est générée, quand la force extérieure et/ou le changement de celle-ci dépassent des valeurs seuil prédéfinies.
